Europäisches Patentamt

European Patent Office

Office européen des brevets

(19)

(11) Publication number: **0 237 609**
**A1**

# EUROPEAN PATENT APPLICATION

(12)

(21) Application number: 86103929.5

(22) Date of filing: 21.03.86

(51) Int. Cl.4: **C04B 35/66** , C04B 28/06 , C04B 28/24 , C04B 30/00

(43) Date of publication of application:
23.09.87 Bulletin 87/39

(84) Designated Contracting States:
DE FR GB IT

(71) Applicant: **ALUMINUM COMPANY OF AMERICA**
**1501 Alcoa Building Mellon Square**
**Pittsburgh, PA 15219(US)**

(72) Inventor: **Bray, Donald Joseph**
**444 Manor Road**
**Delmont Pennsylvania(US)**
Inventor: **Milauskas, Robert Joseph**
**261 Widmer Avenue**
**Lower Burrell Pennsylvania(US)**

(74) Representative: **Baillie, Iain Cameron et al**
**c/o Ladas & Parry Isartorplatz 5**
**D-8000 München 2(DE)**

(54) Insulating refractory.

(57) Disclosed are insulating refractory and method for containing a molten metal such as molten aluminum in an insulating castable or moldable having more than about 2% by weight borosilicate frit inhibitor, the inhibitor containing less than a predominant component of zinc or zinc compound. Insulating refractory properties and resistance to molten metal are provided.

EP 0 237 609 A1

## INSULATING REFRACTORY

This invention relates to insulating refractory compositions for processing molten metals.

Metals typically are processed in the molten state for shaping, molding, or casting, for purification, conversion, or for other processing steps. Furnaces of various designs are used to transfer heat to the metal to place it or maintain it in molten condition. The furnaces require refractory materials of construction which do not break down under high heat rates, high temperatures, or corrosive environments.

The selection of a particular refractory involves evaluating physical and chemical properties to suit a particular furnace application, including the working temperature of the furnace, the rate of temperature change, the load applied during heats, and chemical reactions encountered. Density and porosity of the refractory are directly related to many other physical and chemical properties of the refractory. Refractories having lower densities generally have lower thermal conductivities and higher porosities. The higher the porosity of the refractory, generally the more easily it is penetrated by molten metal, fluxes, or gases. For a given class of refractory, the one with the lowest porosity usually has the greatest strength, thermal conductivity, heat capacity, and corrosion resistance.

Escalating energy costs have had a direct influence on molten metal processes by reason of the high heat and high temperatures involved therein. Insulating refractories can offset a portion of the higher energy costs by containing the heat energy more efficiently. Insulating bricks are available in two types, i.e., for backing refractory bricks or in place of regular refractory bricks. Bricks used for backing are made from naturally porous diatomaceous (siliceous) earth. The insulating bricks used in place of regular refractory bricks are usually called lightweight refractories. Such lightweight refractories are similar in composition to heavy bricks but have an insulating value resulting from the method of manufacturing. For example, waste cork can be ground, sized, and mixed with fired clay, which then can be molded and burned. In the kiln the cork burns out, leaving a highly porous and light brick. These lightweight refractories may be used safely for temperatures of 2500-2900°F, whereas diatomaceous-earth brick are not suitable above about 2000°F under ordinary conditions.

Pure oxide refractories include alumina, magnesia, zirconia, beryllia, and thoria. All these have been developed commercially for light refractory products. Beryllia is not used commercially in heavy wear because of its high cost and volatilization above 3000°F in the presence of water vapor. Thoria has a number of disadvantages, particularly since its radioactivity places it under the control of the Government. The material that has the widest application of these pure oxide refractories is sintered alumina, which can be used successfully in temperatures up to 3400°F.

Calcium aluminate cements are used with various selected aggregates to form heat-resistant, corrosion-resistant, and abrasion-resistant insulating or structural concretes or mortars. The calcium aluminate can be manufactured from bauxite and limestone to provide hydraulically setting binders. Lightweight aggregates, such as vermiculite or perlite, produce energy saving insulating concretes, while a combination of these with an expanded shale or clay provides a concrete having both insulating properties and improved strength. Other aggregates provide concrete strength for use at high surface temperatures, e.g., vermiculite, 1090°C; expanded shale or clay, 1150°C; crushed firebrick, 1480-1590°C; calcined flint clay, 1480-1590°C; and mullite, calcined kyanite, or bauxite, 1480-1650°C. Many refractory producers supply prepared castable mixes of calcium aluminate cement and selected aggregates.

A castable, or a castable refractory, includes a composition of binder and aggregate which can be cast into a particular shape or design. An example of an insulating or a lightweight castable is available from General Refractories Company under the trademark LITECAST®. LITECAST is characterized as a lightweight, hydraulic-setting, high strength, insulating castable. LITECAST has been identified for use in high temperature applications where the use of a high strength, low conductivity, lightweight refractory would be advantageous. Typical service would be as roofs, upper side walls, and backup insulation for aluminum melting and holding furnaces. LITECAST refractory has a typical chemical analysis of CaO 4.8%, $Al_2O_3$ 54.5%, $SiO_2$ 36.3%, $Fe_2O_3$ 1.1%, $TiO_2$ 1.1%, alkalies 0.8%, and ignition loss 0.5%.

Another insulating castable is available from Harbison-Walker Refractories under the trademark H-W LIGHTWEIGHT CASTABLE 26. This insulating castable also can be characterized in a manner parallel to LITECAST insulating castable in terms of low density, low thermal conductivity, good refractory characteristics, and good strength. LIGHTWEIGHT CASTABLE 26 has a representative chemical analysis of CaO 6.6%, $Al_2O_3$ 52.9%, $SiO_2$ 37.0%, alkalies ($Na_2O$, $K_2O$, $Li_2O$) 1.5%, $Fe_2O_3$ 1.1%, $TiO_2$ 0.8%, and MgO 0.1%.

Both examples of commercially available insulating castable are hydraulically set up with calcium aluminate as binder.

2

A lightweight castable for insulating service while resisting aluminum penetration is available under the trademark ALSTOP® from General Refractories Company. This insulating castable has been used successfully for aluminum reverberatory furnace subhearths and lower side wall insulation, trough linings, and door linings. This lightweight castable can be identified as a calcium aluminate and silicate combined with a barium sulfate inhibitor to prevent penetration by aluminum.

A moldable is a refractory which can be molded in place to conform to the shape or design of a high temperature container. An insulating moldable can be produced from ceramic fibers dispersed in a water-based refractory silica binder. The moldable is dried to produce a hard surface, low thermal conductivity insulation in a good refractory bond. Such an insulating moldable is available from The Carborundum Company under the trademark FIBERFRAX LDS MOLDABLE. The moldable is typically used in hot or cold patching of refractory cracks and fissures or in trough linings for aluminum or other nonferrous metals.

Molten metals can attack a refractory with very destructive results. Metal in the molten state is a significant reducing agent. Conforming to this nature are molten aluminum and aluminum alloys. Refractories for furnace linings, trough linings, and the like must have a penetration or corrosion resistance to molten aluminum. Refractories have been developed which have such a penetration resistance. For example, dense refractories containing calcium aluminate cement have been developed to achieve corrosion resistance to molten aluminum.

Refractories of crystallized alumina or aluminum silicates can be used where severe slagging or metal contact occurs. Mullite and corundum have high slag resistance and remain in the crystalline state at temperatures of 1600°C and higher. High temperature kilns can furnish alumina bricks that closely approach pure corundum in properties and mullite bricks that are made from calcined Indian kyanite, with the old clay bond replaced by a mullite bond consisting of interlocking crystals.

LaBar, U.S. 4,088,502, discloses a corrosion-resistant castable of calcium aluminate cement and fused silica aggregate combined with a zinc borosilicate frit inhibitor. A dense refractory having bulk densities above 1.79 gm/cc and apparent porosities below 28% exhibits no penetration in the corrosion test disclosed in the patent.

Another example of a corrosion-resistant dense castable refractory is found in Hines et al, U.S. 4,348,236, which discloses a high density refractory of alumina, calcium aluminate, and only 0.5-1.5% by weight borosilicate frit. This refractory is used in large block castables. The low specified amount of borosilicate frit must be controlled to avoid deformation at high temperatures. Borosilicates are materials which usually contain about 13-35% by weight of $B_2O_3$ and 25-87% by weight of silica and have low expansion coefficients, superior resistance to shock, excellent chemical stability, and high electric resistance. Applications include baking dishes, laboratory glassware, pipe-lines, high-tension insulators, and washers. Borosilicate glasses are available under the trade name of Pyrex.

Lobaugh, U.S. 2,516,892, discloses a refractory of calcium aluminate cement and aggregate combined with 0.5-25% of insoluble silicate frit. The refractory aggregate or filler can be fired clay grog, crushed firebrick, expanded shale, diatomaceous earth, vermiculite, or crushed red brick. Lobaugh discloses the addition of elements which are substantially insoluble in water and in cement mixes and a relatively low melting point, i.e., 1600°F or below, for the purpose of providing a refractory concrete with a ceramic bond of increased strength.

Application of a vitreous or glassy material is found in McDonald et al, U.S. 2,997,402. A boroaluminate glass was combined with alumina, silica, and aggregate. McDonald requires the silica content of the glass to be maintained in an amount not to exceed 10% by weight of the glass. The disclosed metal penetration test (patentees' Example III) employs a glass containing 1.4% $SiO_2$. The McDonald mixture contains no cement, but relies on a thermally sintered bond. The mixture is pressed into bricks and fired slowly to a temperature of 1375°C.

Talley et al, U.S. 4,126,474, discloses a barium sulfate inhibitor for refractories such as alumina silica. Barium sulfate is added in an amount of 0.5-30% by weight. The patent is assigned to General Refractories Company, and this material most likely forms the basis for the product available commercially under the trademark ALSTOP lightweight castable.

Hofmann, U.S. 4,060,424, discloses a ramming or gunning cement, i.e., one having no room temperature strength, and including a low temperature softening glass or frit. When the mixture is subjected to a temperature as low as 350°C, the frit softens and bonds the refractory grain into a monolithic structure which retains its integrity up to and through the elevated temperatures at which the refractory grains sinter and other high temperature ceramic bonds form. In this way, Hofmann uses a procedure similar to that of McDonald and Lobaugh to use the glass or frit as a binder.

It is an object of the present invention to provide an insulating refractory having a resistance to wetting and penetration by molten metal.

It is another object of this invention to provide the capability of casting or molding a refractory to a shape or design for use in containing a molten metal.

It is an object of this invention to provide a light-weight insulating refractory of low density and high porosity, over the range of those properties for refractories, which is resistant to wetting by molten aluminum.

## Summary of the Invention

This invention includes an insulating refractory, e.g., such as an insulating castable or moldable, in combination with borosilicate frit for containing a molten metal. The refractory contains frit in an amount of more than about 2% by weight. The frit must contain less than a predominant component of zinc or zinc compound. The insulating refractory has a low density relative to the range of refractories suitable for molten metal temperatures.

The present invention also includes a method for containing molten metal in an insulating refractory of castable or moldable form in combination with borosilicate frit.

The present invention is the result of an empirical effort to find new materials for insulation-type refractories having an additional feature of resistance to corrosion or chemical attack by molten metal such as molten aluminum. In one aspect, the present invention has been found to be successful in insulation applications such as in the subhearth of aluminum reverberatory furnaces or in trough applications for transferring molten aluminum metal. The combination of properties which were sought, i.e., insulating and nonwetting to molten metal, are contrary features in refractory products since insulating refractories typically are highly porous which leads to penetration by the molten metal. However, in accordance with the present invention, an insulating castable or moldable of highly porous and low density refractory having excellent insulation characteristics is achieved having an excellent resistance to penetration by molten metal such as molten aluminum.

The insulating refractory and method of the present invention can be achieved by incorporating more than about 2% by weight of a borosilicate frit into an insulating castable or moldable. The insulating castable generally can be provided by a hydraulically setting calcium aluminate cement binder and aggregates such as silicate, or insulating filler such as vermiculite or perlite, or other lightweight filler. The aggregate generally has a particle size above about 200 mesh (Tyler Series). By way of example, the calcium aluminate cement can comprise from about 5% to about 50% by weight of the castable. The aggregate or filler can include from about 50% to about 95% by weight, generally. Other constituents may be present such as iron oxide or titanium dioxide in amounts generally not to exceed 0.5% by weight. Over this 0.5%, the other oxides will tend to cause high temperature degradation in the castable. The insulating moldable can be a refractory such as a water-based refractory silica binder having ceramic fibers dispersed therein. The moldable is selected to provide a generally mechanically mixed composition which is dried to form a hard surface in a molded form.

Borosilicate frit inhibitor is composed of broadly about 15-30% by weight of $B_2O_3$ and about 20-50% by weight of silica and more preferably about 18-23% by weight of $B_2O_3$ and about 22-27% of silica. The borosilicate frit of the present invention must contain less than a predominant amount of a zinc component. More preferably, the borosilicate frit should contain no more than 5.0% by weight of a zinc oxide or other zinc constituent. It has been found that more than a predominant amount of zinc as a component in the borosilicate frit will degrade the high resistance to penetration by molten metal. The borosilicate frit should have a particle size in the range of about 10-100 $\mu$m. Since the frit is mixed usually in an aqueous or water-based mixture, the particle size of the borosilicate frit should be less than about 40 $\mu$m.

The borosilicate frit of the present invention having less than a predominant component of zinc or zinc compound is combined with the insulating castable or moldable in an amount more than about 2% by weight of borosilicate. At 2% or less borosilicate, the refractory fails to provide a high resistance to molten metal. In this regard, the method and refractory of the present invention requires more than about 2% by weight borosilicate and preferably more than about 2.5% by weight borosilicate. The borosilicate preferably contains no more than minor amounts of zinc compound. Minor amounts in this context can be defined as less than about 5.0% by weight.

The refractory of the present invention can provide an insulating castable having a bulk density less than about 2,000 kg/m³ and having a high resistance to penetration by molten aluminum. The refractory for the present invention preferably has a bulk density less than about 1,600 kg/m³ and more preferably less than about 1,300 kg/m³.

The insulating moldable of the present invention has a dried density of less than about 1,000 kg/m³ and preferably less than about 800 kg/m³.

Bulk densities in the context of this invention are determined by the analytical procedure according to ASTM Standard C 134-70, "Standard Test Methods for Size and Bulk Density of Refractory Brick and Insulating Firebrick."

Example I

One of various candidate inhibitors was added to an insulating castable for the purpose of increasing the resistance to molten metal penetration in the refractory. The insulating castable was LITECAST 75-28 supplied by General Refractories. The inhibitors which were tested included the following: (1) barium sulfate which is the prior art additive for providing a resistance to molten aluminum, (2) whiting which can be identified as calcium carbonate and which was obtained from Mississippi Lime Company under the trademark C-55 WHITING, (3) red mud obtained from the J. R. Goslee Company under the trademark R-20, (4) zinc borosilicate frit supplied by Mobay Chemical Company under the product label P1A44P, and (5) borosilicate frit supplied by Mobay Chemical Company under the product label of P2V25P.

A Hobart mixer was used to mix the additive into the castable followed by the addition of water. The mixed compositions were cast into a mold in preparation for a 72-hour cup test. The 72-hour cup test is a recognized standard in the aluminum industry. It is used to determine a resistance to molten aluminum and its alloys. In this Example, 7075 Alloy was contained in a cup specimen at 816°C for 72 hours.

Each composition contained an inhibitor additive in an amount of about 6% by weight.

The chemical composition of the additives is shown in Table I.

The results of the 72-hour cup test of various additives are shown in Table II. Ratings are determined by the depth of penetration of the metal into the refractory, any cracks or bulges, and any impurity pickup of the metal (usually silicon or iron).

## TABLE I

### Chemical Composition of Additives

| Phase/Compound | C-55 | R-20 | P1A44P | P2V25P |
|---|---|---|---|---|
| Calcite, $CaCO_3$ | Large | Med.- | | |
| Dolomite, $CaMg(CO_3)_2$ | Small | | | |
| Quartz, $\alpha$-$SiO_2$ | V. Small+ | V. Small+ | | |
| Nosean, $Na_8Al_6Si_6O_{24}SO_4$ | | Small+ | | |
| Cristobalite, $SiO_2$ | | V. Small+ | | |
| Anatese, $TiO_2$ | | V. Small+ | | |
| Rutile, $TiO_2$ | | V. Small- | | |
| Hematite, $\alpha$-$Fe_2O_3$ | | V. Small+ | | |
| Kaolinite, $Al_2Si_2O_5(OH_4)$ | | V. Small- | | |
| Boehmite, $\alpha$-$Al_2O_3 \cdot H_2O$ | | Trace | | |
| | | | | |
| ZnO, % | | | 59.5 | |
| $B_2O_3$, % | | | 32.5 | 21.5 |
| $SiO_2$, % | | | 8.0 | 25.1 |
| $Na_2O$, % | | | | 15.3 |
| CaO, % | | | | 22.2 |
| MgO, % | | | | 3.0 |
| $Al_2O_3$, % | | | | 0.7 |
| F, % | | | | 12.2 |
| | | | | |
| Melting Range, °C | | | 732-788 | 660-688 |

TABLE II

Comparison of Additives

| | Litecast 75-28 | 75-28+BaSO$_4$ | 75-28+C-55 | 75-28+R-20 | 75-28+P1A44P | 75-28+P2V25P | Alstop |
|---|---|---|---|---|---|---|---|
| **A. Penetration** | | | | | | | |
| 1. Side walls | 20 mm | 3 to 5 mm | 22 mm | 8 to 12 mm | 7 to 18 mm | None | None |
| 2. Bottom | 19 mm | 2 to 5 mm | 15 to 22 mm | 7 to 11 mm | 3 mm | None | None |
| **B. Cracks** | Yes | None | Yes | None | None | None | |
| **C. Bulges** | None | None | Yes | None | None | None | |
| **D. Analytical Results, %** | Unavailable due to complete | | Unavailable due to complete | | | | |
| Si | penetration of | 0.7 | penetration of | 0.01 | 1.65 | 0.01 | 0.3 |
| Fe | metal into | 0.05 | metal into | 0.04 | 0.11 | 0.04 | 0.03 |
| Cu | sample | 0.19 | sample | 0.01 | 0.01 | 0.01 | |
| Cr | | 0.01 | | 0.01 | 0.0 | 0.01 | |
| Ni | | 0.01 | | 0.01 | 0.0 | 0.01 | |
| B | | 0.0001 | | 0.0 | 0.0 | 0.00 | |
| Zr | | 0.002 | | 0.006 | 0.004 | 0.006 | |
| Zn | | 0.0 | | 0.05 | 0.48 | 0.08 | |
| Ti | | 0.01 | | 0.0 | 0.01 | 0.00 | |
| **E. Remarks** | | Metal skull difficult to remove. Si pickup high | | Extensive penetration while pickup is low | Extensive penetration and pickup | No penetration; skull easily removed | Metal skull difficult to remove |
| **F. Rating** | Unacceptable | Good | Unacceptable | Unacceptable | Unacceptable | Excellent | Very good to excellent |

0 237 609

Aluminum penetration was observed in the insulating castable without additive, with whiting, with red mud, and with zinc borosilicate frit. Insulating castable with barium sulfate additive or with borosilicate frit exhibited successful resistance to aluminum penetration.

The insulating castable without any additive was completely penetrated by the molten aluminum. Barium sulfate added to the insulating castable in an amount of about 6% by weight exhibited aluminum penetration and high silicon impurity pickup in the metal. Although whiting has been used as a coating material for molten metal applications, it had a deleterious effect as an additive and exhibited the highest penetration in the test. Although no porosity data was measured, it is thought that the whiting caused an increase in porosity by decomposition of calcium carbonate. Red mud is another coating material, but it did not improve the penetration resistance of the insulating castable.

Zinc borosilicate frit exhibited extensive penetration, especially on the sides of the cup. Analytical results also indicated an excess of pickup or accumulation of silicon and iron. These tests show that the inhibitor of the present invention cannot be provided by zinc borosilicate frit or borosilicate frit having zinc or zinc compound, e.g., zinc oxide, as a predominant component.

The additive of borosilicate frit produced a nonwetting surface, and low metal pickup.


Example II

The borosilicate frit identified as having superior properties of resistance to molten metal was added to another lightweight castable, i.e., LIGHTWEIGHT NO. 26 supplied by Harbison-Walker. LIGHTWEIGHT NO. 26 is a low density castable. For example, LIGHTWEIGHT NO. 26 has a density lower than that of LITECAST 75-28. The borosilicate frit additive was added in an amount of only 4% by weight. This amount, which is lower than the Example I amount, was also added to LITECAST 75-28. Results are shown in Table III.

Harbison-Walker LIGHTWEIGHT NO. 26 promoted with borosilicate frit inhibitor exhibited virtually no penetration of aluminum and provided a nonwetting surface to the cast refractory.

## TABLE III

### Concentration of Additive and Alternate Base Casta⌐

| | Litecast 75-28 (1.24 gm/cc) | | H-W #26 (1.0 gm/⌐ |
|---|---|---|---|
| % P2V25P Frit | 6 | 4 | 4 |
| A. Penetration | | | |
| 1. Side walls | None | None | None |
| 2. Bottom | None | None | None |
| B. Cracks | None | None | None |
| C. Bulges | None | None | None |
| D. Analytical Results, % | | | |
| Si | 0.01 | 0.01 | 0.02 |
| Fe | 0.04 | 0.01 | 0.01 |
| Cu | 0.01 | 0.09 | 0.09 |
| Cr | 0.01 | 0.01 | 0.01 |
| Ni | 0.01 | 0.01 | 0.01 |
| B | 0.00 | 0.0001 | 0.0001 |
| Zr | 0.006 | 0.002 | 0.002 |
| Zn | 0.08 | — | — |
| E. Remarks | No penetration. Skull removed easily | No penetration. Skull removed easily | No penet tion. S removed easily |
| F. Rating | Excellent | Excellent | Excellen |

Example III

An insulating moldable of ceramic fibers dispersed in a water-based refractory was selected for admixture with the borosilicate frit inhibitor. LDS MOLDABLE supplied by ıdum Company was used in the test. Cup test specimens of LDS MOLDABLE alone and LDS with 6% P2V25P frit were formed. Frit was added by placing the LDS MOLDABLE in a Hobartiding frit while mixing. Compositions were troweled into the cup mold. A 72-hour cup test ⱥd at 816°C using 7075 Aluminum Alloy. The cup test results of the LDS MOLDABLE with arıbitor are shown in Table IV.

The LDS MOLDABLE alone demonstrated poor molten metal resistance. LDS MO 6% borosilicate frit inhibitor exhibited resistance to the molten metal.

9

TABLE IV

Moldable

| | IDS Moldable | IDS + 6% P2V25P |
|---|---|---|
| A. Penetration | | |
| 1. Side walls | Extensive | None |
| 2. Bottom | Extensive | None |
| B. Cracks | None | None |
| C. Bulges | Yes | None |
| D. Analytical Results, % | | |
| Si | Unavailable due | 0.01 |
| Fe | to complete | 0.02 |
| Cu | penetration of | 0.1 |
| Cr | metal into | 0.01 |
| Ni | sample | 0.01 |
| B | | 0.0002 |
| Zr | | 0.003 |
| E. Remarks | | No penetration. Metal skull removed fairly easily |
| F. Rating | Unacceptable | Excellent |

In other tests, the insulating moldable combined with the additive inhibitor of the present invention was found to have a lower thermal conductivity and a higher modulus of rupture than insulating moldable without additive.

Example IV

Tests were conducted to determine the concentration requirements of borosilicate frit additive in an insulating castable to achieve resistance to molten metal. Lightweight castable used in the test was General Refractories LITECAST 75-28. The borosilicate frit was P2V25P frit supplied by Mobay. The compositions were mixed in a Hobart mixer and tested in a 72-hour cup test using 7075 Aluminum Alloy at about 1500°F for 72 hours. The results of the test are shown in Table V.

TABLE V

Concentration of Additive

P2V25P Frit

| | None | 6% | 1.1% | 2% | 4% |
|---|---|---|---|---|---|
| A. Penetration | | | | | |
| 1. Side walls | 20 mm | None | 5-20 mm | 3-20 mm | None |
| 2. Bottom | 19 mm | None | 2-6 mm | 2-8 mm | None |
| B. Cracks | Yes | None | None | None | None |
| C. Bulges | None | None | None | None | None |
| D. Analytical | No metal | Si 0.01<br>Fe 0.04<br>Cu 0.01<br>Ni 0.01<br>Zn 0.08<br>Cr 0.0004<br>Zr 0.006 | | | Si 0.01<br>Fe 0.01<br>Cu 0.09<br>Ni 0.01<br>B 0.0001<br>Cr 0.01<br>Zr 0.002 |
| E. Remarks | Complete penetration | No penetration. Metal skull removed easily | Extensive metal penetration | Extensive side penetration | Metal skull removed easily Some fines came off with skull |
| F. Rating | Unacceptable | Excellent | Unacceptable | Unacceptable | Excellent |

The lightweight castable without additive was completely penetrated by aluminum metal. Lightweight castable in 1.1% additive was penetrated significantly to distances of 5-20 millimeters in the side wall and 2-6 millimeters in the bottom, representing extensive metal penetration. Insulating castable with 2% additive showed extensive penetration of refractory to distances of 3-20 millimeters in the side wall and 2-8 millimeters in the bottom. Insulating castable having 4% and 6% additive demonstrated no penetration in the side wall or bottom.

The insulating refractory of the present invention includes a lightweight insulating castable and at least over about 2% by weight borosilicate frit inhibitor. Preferably, the borosilicate frit inhibitor additive is included in an amount over about 2.5% by weight in the insulating refractory and more preferably over about 3% by weight.

**Claims**

1. An insulating refractory for containing a molten metal, characterized by comprising an insulating castable or moldable and more than about 2% by weight borosilicate frit having less than a predominant component of zinc or zinc compound.

2. A refractory as set forth in claim 1, characterized by containing more than about 2.5% by weight borosilicate frit.

3. A refractory as set forth in claim 1 or 2, characterized in that said frit contains minor amounts or less of zinc or zinc compound.

4. A refractory as set forth in any one of claims 1 to 3, characterized in that said insulating castable comprises calcium aluminate cement and silica and has a bulk density less than about 2,000 kg/m³, preferably less than about 1,600 kg/m³ and preferably less than about 1,300 kg/m³.

5. A refractory as set forth in any one of claims 1 to 4, characterized by comprising insulating aggregate.

6. A refractory as set forth in any one of claims 1 to 5, characterized in that said insulating moldable comprises ceramic fibers dispersed in water-based silica binder.

7. A refractory as set forth in claim 6, characterized by having a dried density of less than about 1,000 kg/m³, preferably less than about 800 kg/m³.

8. A method of containing or handling molten metal comprising adding at least about 2% by weight borosilicate frit inhibitor to an insulating castable or insulating moldable to form a refractory having resistance to wetting by said metal, said inhibitor having less than a predominant amount of zinc or zinc compound, said refractory being further formulated as defined in any one of the preceding claims.

9. A material for containing molten aluminum characterized by comprising an insulating refractory as defined in any one of the preceding claims.

10. A material as set forth in claim 9, characterized by having a low refractory thermal conductivity while maintaining resistance to molten metal.

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| D,X | US-A-2 516 892 (F.E. LOBAUGH)<br>* Columns 1,2; column 3, lines 6-53 * | 1-3,5 | C 04 B 35/66<br>C 04 B 28/06<br>C 04 B 28/24<br>C 04 B 30/00 |
| Y | | 4,6-10 | |
| | --- | | |
| Y | CHEMICAL ABSTRACTS, vol. 78, no. 22, 4th June 1973, page 228, abstract no. 139671y, Columbus, Ohio, US; & JP-B-72 23 168 (SHINAGAWA FIRE BRIKE CO. LTD.) 28-06-1972 | 4 | |
| | --- | | |
| D,Y | US-A-4 348 236 (J.E. HINES)<br>* Claims 1,6-9,13-24; column 6, lines 6,7; tables I,III * | 8,9 | |
| | --- | | TECHNICAL FIELDS SEARCHED (Int. Cl 4) |
| Y | DE-A-3 219 470 (ALCAN INTERNATIONAL)<br>* Claims 1-14; page 8, lines 29-35; page 9, lines 1-28 * | 6-10 | C 04 B |
| | --- | | |
| D,A | US-A-4 060 424 (H.E. HOFFMAN)<br><br>* Claim 1; column 4, table 1 and lines 62-64 * | 1-3,5-10 | |
| | --- | | |
| A | GB-A-1 135 147 (BROWN, BOVERI & CO.)<br>* Claims 1,3,7-9 * | 1-10 | |
| | --- /-/- | | |

The present search report has been drawn up for all claims

| Place of search | Date of completion of the search | Examiner |
|---|---|---|
| THE HAGUE | 17-11-1986 | SCHURMANS H.D.R. |

European Patent Office

**EUROPEAN SEARCH REPORT**

Application number

EP 86 10 3929

| | **DOCUMENTS CONSIDERED TO BE RELEVANT** | Page 2 |
|---|---|---|

| Category | Citation of document with indication, where appropriate, of relevant passages | Relevant to claim | CLASSIFICATION OF THE APPLICATION (Int Cl 4) |
|---|---|---|---|
| D,A | US-A-4 088 502 (R.G. LABAR) <br> * Whole document * <br><br> ----- | 1-10 | |
| | | | **TECHNICAL FIELDS SEARCHED (Int. Cl 4)** |

| The present search report has been drawn up for all claims | | |
|---|---|---|
| Place of search <br> THE HAGUE | Date of completion of the search <br> 17-11-1986 | Examiner <br> SCHURMANS H.D.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82